(19) Europäisches Patentamt

European Patent Office

Office européen des brevets

(11) Publication number: **0 264 182 B1**

(12) **EUROPEAN PATENT SPECIFICATION**

(45) Date of publication of patent specification: **02.06.93** (51) Int. Cl.⁵: **G01N 1/28**, G01N 35/00

(21) Application number: **87307601.2**

(22) Date of filing: **27.08.87**

(54) Analysing apparatus and method for providing precisely controlled dilution of liquid samples.

(30) Priority: **14.10.86 US 918704**

(43) Date of publication of application:
**20.04.88 Bulletin 88/16**

(45) Publication of the grant of the patent:
**02.06.93 Bulletin 93/22**

(84) Designated Contracting States:
**AT BE CH DE ES FR GB IT LI NL SE**

(56) References cited:
**WO-A-81/00911**
**WO-A-82/03690**
**FR-A- 2 091 793**
**US-A- 3 522 819**
**US-A- 3 833 016**

(73) Proprietor: **HERCULES INCORPORATED**
**Hercules Plaza**
**Wilmington Delaware 19899(US)**

(72) Inventor: **Parrent, George B., Jr.**
**35 Dalton Road**
**Chelmsford MA 01824(US)**
Inventor: **Hauer, Harold**
**103 Hickory Spring Road**
**Wilmington Delaware 19807(US)**

(74) Representative: **Cross, Rupert Edward Blount
et al
BOULT, WADE & TENNANT 27 Furnival Street
London EC4A 1PO (GB)**

Rank Xerox (UK) Business Services
(3.10/3.6/3.3.1)

**Description**

This invention relates to an analysing apparatus and method for analysing liquid samples, and particularly for controlling the dilution of a liquid to be analyzed.

Such an apparatus and method are disclosed in European patent application no. EP-A-0 247 800.

Small volumes of liquid samples are analyzed in a detector which senses characteristics of the liquid sample and records the information. The sample liquid is selectively introduced into the detector and individually analyzed by sensing and measuring, and the information is rapidly recorded.

In processing the liquid the sample through the detector the sample liquid is diluted in a diluting liquid and the processing of the sample liquid and its analysis takes place with the sample liquid carried in a diluent.

The amount of dilution of the sample liquid in the diluent is controlled. Among other reasons for exercise of control is conservation of the sample liquid or of the reagent. This is particularly important when the available volume of sample liquid is limited.

In many automated chemical analysis systems the sample to be analyzed must be diluted, mixed with reagents, and passed on to a suitable sensor.

A sampling of solutions and the removal of a diluted sample are disclosed in US3522819 (Roberts) for apparatus for sampling solutions containing solids. A separation device is described to remove liquid from a slurry. A membrane separates a diluent stream from the sample slurry. Water passed across the membrane draws the sample liquid through the membrane by capillary action and by the differential pressure created by the flow of diluent. In a preferred embodiment, the diluent is prevented from flowing into the sample solution by the configuration of the apparatus which is such that diluting water entering the apparatus does not reach a cavity in which the membrane is positioned.

A dialysis device is disclosed in WO81/00911 (The Prince Charles Hospital Development Centre Trust). A dialysis membrane is clamped between two flat plates to effect a separation of a solid and liquid phase. After the sample stream has been passed through the device, and before discharge, it is passed back through a pumping device with a pumping volume selected by the user, thereby to maintain a closed system. This recycle of the sample stream is required to maintain a synchronous flow of the sample and recipient streams.

Apparatus for segregation in a solution of insoluble bodies in an aqueous medium is disclosed in FR2091793 (Wilson Pharmaceutical). The disclosed device is an apparatus for separating liquid and solid phases by centrifugation. A hydrophobic membrane separates two compartments, each of which may be opened for retrieval of the contents. The criteria for membrane selection are:

1. a sufficiently high contact angle so that water does not enter the pores at atmospheric pressure yet low enough that an appropriately applied (centrifugal) force can draw the liquid through the pores; and

2. the bubble point is low enough that gas can pass through the wet membrane to equalise the pressure on both sides.

There is no provision for flowing streams to deliver the sample or to transport the filtered material.

According to a first aspect of the present invention, there is provided a method for providing precisely controlled dilution of liquid samples in analysing liquid samples, using an analytical detector for measurement of characteristics of the liquid, including the steps of providing a supply of a sample liquid in contact with one surface of a membrane having pores; passing a stream of diluent across the other surface of said membrane and through an analytical detector for analyzing the sample liquid; and applying a pressure differential across said membrane to controllably provide amounts of said sample liquid in said diluent stream sufficient for detection of said sample liquid by the analytical detector, whereby said sample liquid is diluted in the diluent stream upon application of said pressure differential characterised in that said pressure differential applied across said membrane is at least equal to a minimum liquid entry pressure differential necessary to allow feeding of a diluted liquid sample to the analytical detector and in that the sample liquid does not penetrate through said membrane in the absence of application of said minimum liquid entry pressure differential.

A second aspect of the present invention provides an apparatus for providing precisely controlled dilution of liquid samples in the analysis of liquid samples, comprising a supply means for providing a sample liquid and a diluent for said liquid; conduit means for transporting said diluent in said apparatus and means connected to said conduit means for applying pressure to move said liquid and diluent through said conduit means; a detector for sensing the amount of said liquid in said diluent; a pair of chambers contained in a housing and connected so that a first chamber holds the sample liquid and a second chamber receives a flowing stream of said diluent; a porous membrane positioned in the housing between

2

and separating said chambers and the sample liquid and diluent therein, and means for applying a pressure differential on said sample liquid, characterised in that said membrane is impervious to the passage of said sample liquid from the first chamber to the second chamber, in the absence of application of a minimum liquid entry pressure differential on said sample liquid held in said first chamber; in that said means are adapted for applying a pressure differential at least equal to said minimum liquid entry pressure differential and in that conduit means are provided for transporting said sample liquid in said apparatus.

The method and apparatus of the invention permit a fine degree of control of the amount of dilution of the sample liquid in the diluent, and in particular permit a high percentage of dilution of the sample liquid in the diluent.

Further the apparatus of the invention is of simple construction and is easy to manufacture and use.

In general, in operation the sample liquid is passed through a preferably non-wetting porous membrane, preferably from a reservoir of sample liquid, to a flowing stream of diluent which is preferably constantly flowing when the sample liquid penetrates the membrane under positive pressure differential from the sample side of the membrane. The pressure differential can be obtained either by means for exerting pressure on the sample liquid, as for example on a stream of sample liquid on the entry side of the membrane, or by a reduction in pressure on the exit side of the membrane.

The passage of the sample liquid through the membrane requires a minimum liquid entry pressure differential, hereinafter referred to as MLEPD, across the membrane to cause penetration through the pores and not the material. This MLEPD must be enough to give a penetration of sample liquid which provides in the analyzed diluent stream a detectable presence of the sample liquid in the analytical detector receiving and measuring the stream.

The invention will now be described by way of example with reference to the drawings, in which:-

Fig. 1 is a block diagram illustrating an apparatus embodying the present invention;

Fig. 2 is a side elevation partly broken away of a diluter assembly used in the apparatus of Fig. 1;

Fig. 3 is a sectional view of the diluter assembly rotated 90° counter clockwise;

Fig. 4 is a bottom plan view of the top plate of the diluter assembly of Fig. 2;

Fig. 5 is a top plan view of the bottom plate of the diluter assembly of Fig. 2;

Fig. 6 is a sectional view of a portion of a conduit conveying a stream of sample liquid;

Fig. 7 is a schematic diagram for explaining the functions of a means for controlling the pressure of the sample liquid on the membrane in the apparatus of Fig. 1;

Fig. 8 is a sectional view of a T-joint in the conduit for conveying the sample liquid;

Fig. 9 is a graph diagrammatically illustrating operation of an apparatus according to the invention with a specific sample liquid and membrane; and

Fig. 10 is a graph diagrammatically illustrating the operation of an apparatus according to the invention with a specific sample liquid and another specific membrane.

It will be understood that sample liquid as referred to herein refers to samples and reagents and other inputs as disclosed in the above noted European Patent Application No. 87304538.9.

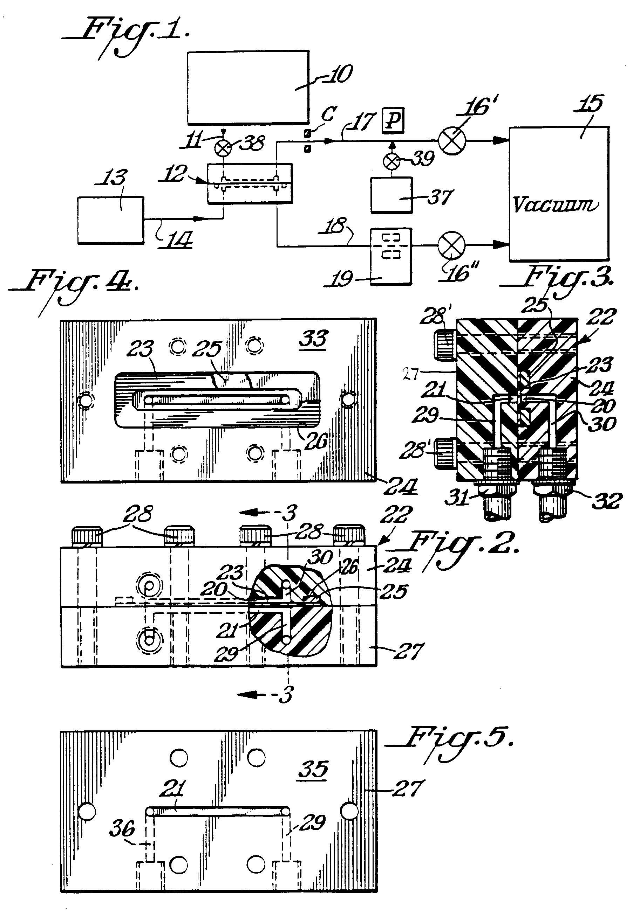

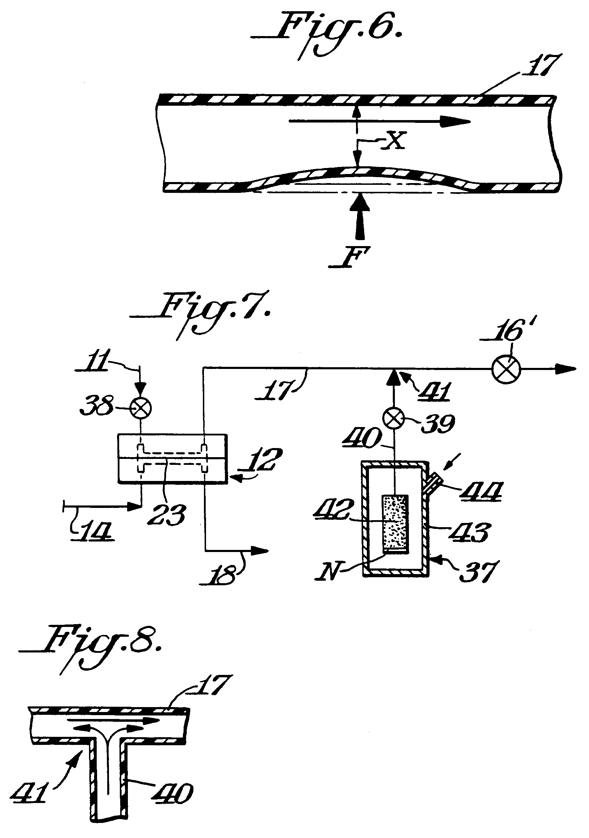

'Reservoir' as used herein refers to a part of the apparatus in which a sample liquid is held. In the apparatus shown in Figure 1 the reservoir is that part of the apparatus which is located between valve 38 and valve 16', and includes a portion of conduit 11, chamber 20 in diluter assembly 12, port 30 (Fig. 2) and that portion of conduit 17 which connects port 30 with valve 16'.

In the apparatus to be described samples and reagents are processed to form a stream of sample liquid which flows through the apparatus to a detector which senses and determines properties in the composition of the sample liquid. In the apparatus shown in Figure 1 samples and reagents are provided from a supply means 10 to form a flowing liquid stream. The structure designated by the numeral 12 is a diluter assembly positioned to receive the flowing stream of sample liquid and a diluent stream transported from a diluent supply 13 through a line 14. In the diluter assembly 12 a portion of the sample liquid is combined with the diluent to form a diluent liquid sample, which is transported from the diluter assembly 12 through a line 18. The remainder of the sample liquid not combined with the diluent is expelled through line 17. The flowing streams are transported through the apparatus by a driving force supplied either by a vacuum source 15 or by a positive pressure. The vacuum source 15 is connected to the apparatus through valves 16' and 16". A positive pressure source would be similarly connected to the apparatus through valves.

In Fig. 1 the sample liquid in the sample stream moves from the supply 10 into the diluter assembly 12 through line 11 and a controlled portion is forced from a reservoir formed in the diluter assembly 12 and line 17 into the diluent as described below. On being withdrawn from the diluter assembly 12 through line 18, the diluted liquid sample is passed through an analytical detector 19 such as a photometric detector. The transport of the liquid streams through lines 11, 17 and 18 and diluter 12 is controlled by valve 16' in line 17 and valve 16" in line 18. In a normal operational sequence of the system of Fig. 1 the driving

3

EP 0 264 182 B1

pressure difference may be in the range of 8465Nm$^2$ to 50790Nm$^2$ (2 1/2 to 15 inches of mercury).

The structure of the diluter assembly 12 is illustrated in Figs. 2, 3, 4 and 5. The assembly comprises two small chambers 20 and 21 in a housing 22, which chambers 20 and 21 are separated by a laterally extending membrane 23. A suitable membrane 23 is a Gore-Tex (Trade Mark) membrane with a 1.0 micron pore size supported on a non-woven polypropylene sheet.

Referring to Fig. 2, the diluter assembly 12 is shown in front elevation with the housing 22 partly broken away. The housing 22 has a top plate 24 in which is seated a sealing ring 25 in a groove 26 formed in a top plate 24. The housing 22 has a bottom plate 27 joined to and abutting the top plate 24. Chamber 20 is formed in top plate 24 and chamber 21 is formed in bottom plate 27 and the chambers 20 and 21 meet when the plates 24 and 27 are joined together.

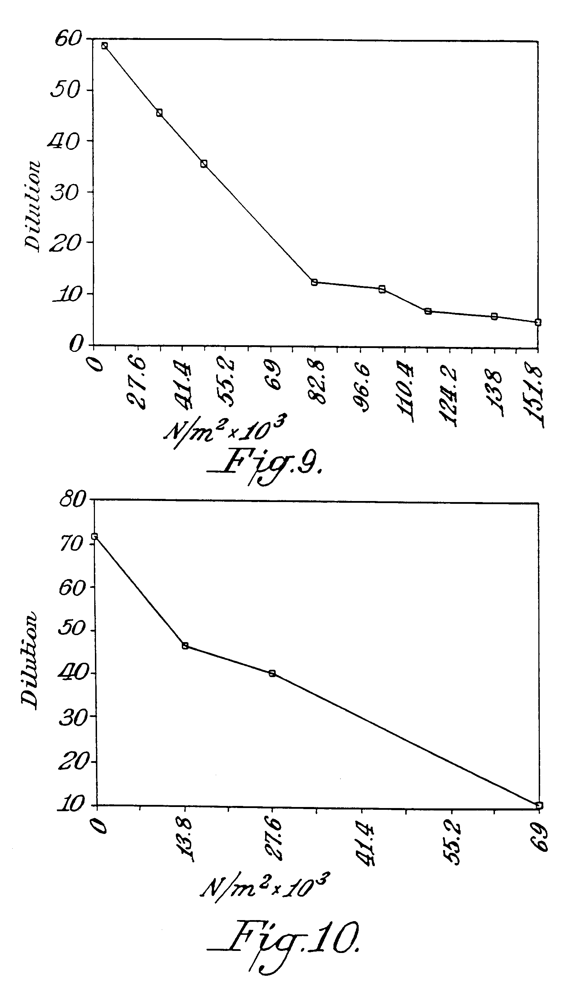

Fig. 4 is a bottom plan view of the top plate 24 separated from the assembly in the housing 22. This plan view shows a planar surface 33 forming the face of plate 24 which interfaces with the bottom plate 27. The membrane 23 extending across the surface 33 is partly broken away to reveal the sealing ring 25. The sealing ring 25 in turn is partly broken away to illustrate its positioning in the groove 26.

At the right side of Fig. 2, in the broken away area, the chamber 20 and an end of the port 30 opening into the chamber 20 can be seen in full lines. To the left the remainder of the chamber is shown in broken lines thus illustrating the narrow elongate shape of the chamber 20.

Fig. 5 is a top plan view of the bottom plate 27, showing a planar surface 35 forming the face of plate 27 which interfaces with the top plate 24. The narrow, elongate chamber 21 is shown and the ends of the port 29 and port 36 opening into the chamber 21 are shown.

The membrane 23 and the sealing ring 25 are positioned between the plates 24 and 27. The membrane 23 extends laterally between the chambers 20 and 21 so as to separate the chambers 20 and 21 from each other while providing with its porosity, passage for a liquid from the chamber 20 to chamber 21. The broken away section of plates 24 and 27 shown at the right in Fig. 2 illustrates the interface between the joined plates 24 and 27 at the right end of chambers 20 and 21. An edge of the membrane 23 extending under the sealing right 25 is clamped beneath the sealing ring between the plates 24 and 27. The clamping action serves both to secure the membrane 23 in position between chambers 20 and 21 and to provide a fluid tight seal against seepage of the liquids.

Fig. 2 and Fig. 3 are different embodiments of the diluter assembly 12. The plates 24 and 27 are tightly clamped together by bolts 28 in Fig. 2 and bolts 28' in Fig. 3. In Fig. 2 the heads of bolts 28 are shown at plate 24. In Fig. 3 the heads of bolts 28' are shown at plate 27.

Fig. 3 is a cross-section. In Fig. 3 the diluter assembly 12 is turned at right angles to the orientation in Fig. 2.

The chambers 20 and 21 at the center of the housing 22 are shown separated by the membrane 23 which is shown in cross-section. Port 29 provides a passageway to the chamber 21 in the bottom plate 27 while port 30 provides a passageway to the chamber 20. Nipples 31 and 32 screwed into threaded recesses of the plates 27 and 24 respectively connect lines 18 and 17 to the ports 29 and 30 respectively. Thus, Fig. 3 illustrates the means for egress of the fluid stream from the diluter assembly 12.

The membrane 23 is distinguished by a non-wetting characteristic with respect to the sample liquid and the diluent. This non-wetting characteristic is a factor in the passage of the sample liquid through the membrane. Another factor is the force or pressure exerted on the sample liquid at the sample side of the membrane 23.

Since the membrane is not wetted by the process stream liquid or the diluent, the normal forces of capillary action which would draw liquid across the membrane, in either direction, are not operative. Thus, liquid must be forced across the membrane by an external means such as an applied pressure differential.

The sample stream can be forced through the membrane into the flowing diluent stream by the application of positive pressure in excess of MLEPD on the sample reservoir. The rate of transport into the diluent is a function of the membrane porosity, the wetting characteristics of the membrane as expressed by the MLEPD, the exposed surface area of the membrane, the pressure applied to the liquid to drive it across the membrane, and the pressure gradient in the diluent stream.

The total resistance to flow in any fluid path is an important component of the liquid transport. Thus, the resistance to flow across the membrane is dictated by the pore size and distribution within the membrane, the wettability of the membrane and any resistance to flow experienced by the liquid on its path to the membrane. For instance, a restriction in the conduit through which the liquid passes will contribute to this resistance.

In the apparatus of Figure 1 pressure is applied to the sample liquid through the line 17. A source of pressure is represented in Fig. 1 by the block 37. To apply the pressure on the sample liquid, the valve 16′ is closed and valve 38 in line 11 at the supply 10 is closed; it is possible to provide a differential pressure

4

across the membrane 23 shown in Fig. 2 because the diluent is flowing in a stream from the supply 13, providing an open unrestricted path below the membrane. The diluent must be flowing through the chamer 21 from the supply 13 to effect the passage of the sample liquid through the membrane 23. Moreover, the rate of transport across the membrane is affected by the flow rate of the diluent. Thus, flowing of the diluent through the chamber 21 is a factor in the dilution achieved.

When the valves 16' and 38 are closed the reservoir is formed and a positive pressure can be exerted from source 37 after opening valve 39. This pressure pushes against the stream of the sample liquid in line 17 and in the chamber 20.

As pointed out above, the relationship between the sample liquid and the non-wetting membrane is such that no transport of the liquid through the membrane is possible without the application of at least the MLEPD on the sample side of the membrane. When the applied pressure equals or exceeds the MLEPD, flow across the membrane results. The amount of dilution is a function of the applied pressure. This functional relationship is employed herein to provide a control of the percent of dilution of the sample. It is possible to accurately control high percentages of dilution.

In some constructions of the apparatus the flow of the diluent stream across the membrane to a chamber, such as chamber 21, may draw minute amounts of sample liquid through the membrane, such as membrane 23, in the absence of a minimum liquid entry pressure on the sample side of the membrane. However, such transport is not accurately controllable.

When pressure is applied at P as described above, control of passage of the sample liquid from the reservoir through the non-wetting membrane 23 is augmented to an appreciable degree. Thus, the amount of pressure influences the quantity of flow through the membrane, and variation in the exerted pressure is functionally related to the quantity of sample transported across the membrane 23 from the reservoir and delivered to the diluent chamber 21, as seen in Fig. 2. The amount of sample provided into a volume of diluent in a period of time is thus a function primarily of the characteristics of the membrane with respect to wetting and variable applied pressure. That is, MLEPD defines the minimum working pressure on the reservoir on the sample side of membrane 23, i.e. at chamber 20, which provides transport to the diluent stream to provide in the diluent stream an amount of the sample liquid which is measurably detectable in the analytical detector 19. Further, it will be seen that at pressures above the MLEPD as determined by the characteristics of the material of the membrane 23, variations in pressure at P will influence the amount of transported sample liquid by changing the rate of transport. Clearly this combination of factors provides a means for controlling the amount of dilution of the sample liquid in the diluent. However, the effectiveness of the combination depends on the non-wetting characteristic of the membrane.

Non-wetting as referred to herein can be defined in terms of the MLPED for the membrane as determined by the pressure difference observed at which liquid penetration into the membrane material has commenced. This can be carried out by a modification of ASTM method D774-67 and the related TAPPI method T403os-76. Briefly stated in this technique, water and the tested membrane are introduced into a Mullin Burst tester apparatus and hydrostatic pressure on the water and the membrane is slowly increased. The pressure at which droplets appear on the outside of the test film is the minimum water entry pressure. Liquids other than water may be used as appropriate to the selection of the sample liquid to be diluted and the membrane to be used to control this dilution. This pressure can be considered to be the threshold of operation. As explained below in greater detail, the threshold or MLEPD is a property of the particular material of the membrane as influenced both by the material compositions and the pore size of the passages and porosity through the membrane material. The passage of the sample liquid occurs only through the pores of the material, not through the material itself. The membrane is composed of a material having pores and a porosity which with the sample liquid provide a non-wetting membrane, that is the liquid will not penetrate the membrane in the absence of application of the MLEPD. The membrane may be composed of such materials as the Gore-Tex (trade mark) membrane described below in the specific example with water as the sample liquid, or stainless steel with a suitable sample liquid.

The control of the mixture of the sample liquid in the diluent is related to the excess of the applied pressure beyond the MLEPD of the membrane material. Pressures ranging above the minimum produce transport of the sample liquid through the pores of the membrane in increasing amounts which vary as a function of the increase in applied pressure in the sample liquid in the reservoir at the sample liquid side or chamber 20 as shown in Fig. 2. This pressure can be varied and controlled at P on line 17 from source 37 as shown in Fig. 1. It will be readily apparent that the variations in the amount of sample liquid penetrating through the pores has a direct effect on the amount of dilution taking place on the chamber 21 side of the membrane 23.

Thus, while the particular membrane, as for example in the specifically described embodiment, with its specific properties, defines a threshold or minimum water entry pressure differential for the intermixture on the diluent side of membrane 23 (chamber 21 of Fig. 2) control of the dilution is affected by the pressure on the sample liquid in the reservoir. The capability of varying this pressure, such as variations in Fig. 1 from source 37, provides a control of the dilution which is independent of the membrane characteristics, i.e., pore sizes and porosity. The importance of this control is explained below.

The control of the pressure on the chamber 20 side of the membrane 23 which provides the variations in pressure can be effected by several means. Representative means are illustrated in Figs. 1, 6, 7 and 8.

Variations in the pressure in line 17 can be provided as by a combination of the source of pressure 37 and an adjustable clamp as shown in Fig. 1. The clamp C pinches the line 17 to provide variability in the line 17. For example, this can be used in combination with the pressure on line 17 from the source 37. As pointed out above, any variable resistance to the flow experienced by the sample liquid on the chamber 20 side of membrane 23 may contribute to the control of the flow across the membrane 23. Exerting resistance to flow in the reservoir portion of line 17 varies the pressure differential which is applied at membrane 23. Consequently, the rate of liquid transport through the membrane 23 may be affected by varying a restriction in the tubing through which the liquid passes, as by resistance at C or at P from the source of pressure 37 or both. This mechanism allows fine tuning of the rate of transport through the membrane and, therefore, the extent of dilution.

Fig. 6 is a sectional view of a portion of line 17 at pressure point F. In this embodiment the line 17 has a flexible wall area at pressure point F and thus the tube can be flexed. Flexing the tube 17 inwardly at F forms a narrowed gut X in the interior passage. Flexing the tube 17 outward increases the interior passage.

Another device for varying the pressure differential between the reservoir portion of line 17 and diluent side of the membrane by restriction of the flow is illustrated in Figs. 7 and 8. An air line 40 joins the line 17 in a T-joint 41 and applies air under variable pressure into the line 17 perpendicularly across the axis of flow in line 17. A valve 39 is provided in air line 40. An enlargement of the T-joint 41 is shown in section in Fig. 8, illustrating the directions of air flow from the pressure source 37. The directional arrows show that the air flow is in both directions at the T-joint 41.

The air pressure in line 40 can be supplied and controlled by means of an embodiment of the source of pressure 37 as shown in Fig. 7. A porous tube 42 in a sealed chamber 43 is attached to the line 40 which extends from the chamber 43 to the T-joint 41. Air (or other driving fluid) is pumped into the chamber under pressure through an inlet 44. The porous tube 42 which is sealed at end N provides resistance to flow of the driving fluid. The key concept is that a membrane or porous tube serves as a resistance modifying the pressure differential source to a suitable working range.

An example of a specific application of the apparatus in the dilution of a methyl orange sample liquid is presented in the data set forth in Fig. 9. This data was obtained in an apparatus as described herein having a Gore-Tex (trade mark) polytetrafluoroethylene membrane, with a pore size of 0.45 micron and typical porosity of 84%. The vacuum pressure in the analysis stream (line 18 in Figure 1) was 27087 $N/m^2$. The abcissa indicates the positive pressure applied at point P when valves 16′ and 38 (Figure 1) are closed. The pressure is shown in Newtons per square metre on liquid in chamber 20, or the reservoir, and a vacuum on the diluent, or analysis stream, measured at 27087$N/m^2$. This pressure gradient forces the sample through the membrane into the diluent stream 18. The ordinate of the graph expresses the dilution of a methyl orange sample in terms of the absorbance singal (520 nm) as a ratio as follows:

Dilution = (concentration in)/(concentration out).

The concentration dependence of the absorbance signal observed at the photodetector 19, Figure 1 was established by passing known concentrations of methyl orange indicator solution directly through the photodetector.

A second example is presented in the data of Fig. 10. This data was obtained in an apparatus as described herein have a Gore-Tex (trade mark) membrane of 1 micron pore size and of 91% typical porosity. The system vacuum pressure was 20315 $N/m^2$ for this experiment. Bromothymol blue indicator solution in 0.01 M sodium hydroxide was used to calibrate the diluter assembly 12 and the photodetector 19. The pressure shown on the abscissa is in Newtons per square metre in liquid in chamber 20, or the reservoir, and a vacuum on the diluent or analysis stream measured at 20315 $N/m^2$.

The manner in which the rate of liquid transport, or penetration, through the membrane is affected by a constriction in line 17 along with the application of a positive pressure at P is now illustrated in the following example. A Gore-Tex (trade mark) membrane of 10-15 micron pore size and 98% typical porosity was folded over to provide a double thickness and inserted in the diluter assembly 12. The apparatus was operated with sample liquid supplied from supply 10 and an applied vacuum as disclosed herein. Without any pressure on the tube 17 (Figure 1) no control over the rate of transport of sample through the membrane could be established. A laboratory C-clamp was applied at point C and tightened to a position which permitted the use of the positive pressure source to control the liquid transport across the membrane.

For example, with pressure from source 37, the tighter the clamp C the more pressure required from source 37 to exert pressure on membrane 23. The extent of the transport and therefore dilution, was confirmed by measuring the displacement of liquid in tube 17 after 10 seconds as a function of positive pressure to the tube at point P. Table 1 summarizes the results.

## TABLE 1

| System Vacuum $N/m^2$ | Positive Pressure $N/m^2$ | Liquid Displacement mm |
|---|---|---|
| 16003 | 0 | 2 |
| 19468 | 34500 | 153 |
| 22008 | 34500 | 162 |
| 22008 | 34500 | 165 |

As a specific example of a suitable membrane, reference is made to "GORE-TEX" (registered trademark) membranes in the range described in the "GORE-TEX" brochure as follows:

## GORE-TEX Membrane Properties

| Pore Size (micron) | Typical Thickness mm | Minimum Water Entry Pressure $N/m^2$ |
|---|---|---|
| 0.45 | 0.076 | 138000 |
| 1.00 | 0.076 | 69000 |

Gore-Tex membrane is an expanded, 100% virgin polytetrafluoroethylene membrane.

Other suitable membranes may be hydrophobically modified Nuclepore (trade mark) polycarbonate or polyester material for processing aqueous solutions, or non-modified polycarbonate or polyester Nuclepore (trade mark) material for use with other solutions.

It will be readily apparent that there are other membranes which can be provided so as to be impervious and not allow entrance or passage in controllably detectable amounts of suitable selected sample liquids to a diluent stream in the absence of a minimum liquid entry pressure differential.

**Claims**

1. A method for providing precisely controlled dilution of liquid samples in analysing liquid samples, using an analytical detector for measurement of characteristics of the liquid, including the steps of providing a supply (10) of a sample liquid in contact with one surface of a membrane (23) having pores; passing a stream of diluent (13) across the other surface of said membrane (23) and through an analytical detector (19) for analyzing the sample liquid; and applying a pressure differential across said membrane (23) to controllably provide amounts of said sample liquid (10) in said diluent (13) stream sufficient for detection of said sample liquid by the analytical detector (19), whereby said sample liquid is diluted in the diluent stream upon application of said pressure differential characterised in that said pressure differential applied across said membrane is at least equal to a minimum liquid entry pressure differential necessary to allow feeding of a diluted liquid sample to the analytical detector (19) and in that the sample liquid does not penetrate through said membrane (23) in the absence of application of said minimum liquid entry pressure differential.

2. A method as claimed in Claim 1, characterised by the step of varying the pressure on said sample liquid in said supply to vary and control the amounts of liquid transported through said membrane (23).

3. A method as claimed in Claim 1 or Claim 2, characterised by the step of holding a portion of said sample liquid in a reservoir while maintaining contact with said one surface of said membrane (23).

4. A method as claimed in Claim 1, Claim 2 or Claim 3, characterised in that said minimum liquid entry pressure differential is a vacuum generated force.

5. A method as claimed in any one of Claims 1 to 3, characterised in that said minimum liquid entry pressure differential is a positive pump generated force.

6. A method as claimed in any preceding claim, characterised in that said pressure is applied by another fluid, said pressure differential being varied by varying a resistance to the flow of said other fluid.

7. An apparatus for providing precisely controlled dilution of liquid samples in the analysis of liquid samples, comprising a supply means (10; 15) for providing a sample liquid and a diluent for said liquid; conduit means (14) for transporting said diluent in said apparatus and means (15) connected to said conduit means for applying pressure to move said liquid and diluent through said conduit means; a detector (19) for sensing the amount of said liquid in said diluent; a pair of chambers (20, 21) contained in a housing (22) and connected so that a first chamber (20) holds the sample liquid and a second chamber (21) receives a flowing stream of said diluent; a porous membrane (23) positioned in the housing between and separating said chambers and the sample liquid and diluent therein, and means (37) for applying a pressure differential on said sample liquid, characterised in that said membrane (23) is impervious to the passage of said sample liquid from the first chamber (20) to the second chamber (21), in the absence of application of a minimum liquid entry pressure differential on said sample liquid held in said first chamber (20); in that said means (37) are adapted for applying a pressure differential at least equal to said minimum liquid entry pressure differential and in that conduit means (11) are provided for transporting said sample liquid in said apparatus.

8. Apparatus as claimed in Claim 7, characterised by means (C) for varying the pressure applied to the sample liquid in the first chamber (20).

9. Apparatus as claimed in Claim 8, characterised in that said conduit means (11, 17) has a flexible portion compressible to vary the applied pressure differential.

10. Apparatus as claimed in Claim 7, Claim 8 or Claim 9, characterised in that said conduit means includes conduits (11, 17) to and from said membrane (23) and said first chamber (20), and valves (38, 16') in said conduits actuable to close and hold sample liquid in a reservoir constituted by sections of said conduits (11, 17) and said first chamber (20).

11. Apparatus as claimed in Claim 7 characterised in that conduit means for transporting sample liquid has a reservoir from which a portion of the sample liquid is forced.

**Patentansprüche**

1. Verfahren zur genau gesteuerten Verdünnung von flüssigen Proben in Analysenflüssigkeitsproben, unter Verwendung eines analytischen Detektors zum Messen von Eigenschaften der Flüssigkeit, mit den Schritten:
Vorsehen eines Vorrats (10) von Probenflüssigkeit in Kontakt mit einer Oberfläche einer Poren aufweisenden Membran (23); Vorbeiführen eines Stromes von Verdünnungsmittel (13) über die andere Oberfläche der Membran (23) und durch einen analytischen Detektor (19) zum Analysieren der Probenflüssigkeit; und Anlegen einer Druckdifferenz über die Membran (23), um Mengen der Probenflüsigkeit (10) in den Verdünnungsmittelstrom (13) zu bringen, die für das Detektieren der Probenflüssigkeit durch den analytischen Detektor (19) ausreichen, wobei die Probenflüssigkeit bei Anlegen der Druckdifferenz in dem Verdünnungsmittelstrom verdünnt wird, dadurch **gekennzeichnet,** daß die über die Membran angelegte Druckdifferenz mindestens gleich einer Mindestdruckdifferenz für den Flüssigkeitseintritt ist, die für das Zuführen einer verdünnten Flüssigkeitsprobe zu dem analytischen Detektor (19) erforderlich ist, und daß die Flüssigkeitsprobe die Membran (23) nicht durchdringt, wenn diese Mindestdruckdifferenz für den Flüssigkeitseintritt nicht angelegt ist.

2. Verfahren nach Anspruch 1, **gekennzeichnet** durch den Schritt des Veränderns des Drucks der Probenflüssigkeit in dem Vorrat, um die durch die Membran (23) transportierten Flüssigkeitsmengen zu verändern und zu steuern.

3. Verfahren nach Anspruch 1 oder 2, dadurch **gekennzeichnet,** daß eine Teilmenge der Probenflüssigkeit in einem Behälter gehalten wird, während sie in Kontakt mit der einen Oberfläche der Membran (23) gehalten wird.

4. Verfahren nach Anspruch 1, 2 oder 3, dadurch **gekennzeichet,** daß die Mindestdruckdifferenz für den Flüssigkeitseintritt eine durch Vakuum erzeugte Kraft ist.

5. Verfahren nach einem der Ansprüche 1 - 3, dadurch **gekennzeichnet,** daß die Mindestdruckdifferenz für den Flüssigkeitseintritt eine durch positives Pumpen erzeugte Kraft ist.

6. Verfahren nach einem der vorangehenden Ansprüche, dadurch **gekennzeichnet,** daß der Druck durch ein anderes Fluid aufgebracht wird, wobei die Druckdifferenz durch Verändern eines Strömungswiderstandes des anderen Fluids verändert wird.

7. Verfahren zum genau gesteuerten Verdünnen von Flüssigkeitsproben bei der Analyse von Flüssigkeitsproben, mit Zuführmitteln (10, 15) zum Liefern einer Probenflüssigkeit und eines Verdünnungsmittels für die Flüssigkeit; Leitungsmitteln (14) zum Fördern des Verdünnungsmittels in der Vorrichtung, und mit den Leitungsmitteln verbundenen Mitteln (15) zum Anlegen von Druck, um die Flüssigkeit und das Verdünnungsmittel durch die Leitungsmittel zu bewegen; einem Detektor (19) zum Erfassen der Menge der Flüssigkeit in dem Verdünnungsmittel; einem Paar von Kammern (20, 21) in einem Gehäuse (22), die derart angeschlossen sind, daß eine erste Kammer (20) die Probenflüssigkeit enthält und eine zweite Kammer (21) einen Strom des Verdünnungsmittels aufnimmt; einer porösen Membran (23), die in dem Gehäuse zwischen den Kammern angeordnet ist und diese und die darin enthaltene Probenflüssigkeit und Verdünnungsmittel voneinander trennt, und Mitteln (37) zum Anlegen einer Druckdifferenz an die Probenflüssigkeit, dadurch **gekennzeichnet,** daß die Membran (23) für den Durchgang der Probenflüssigkeit von der ersten Kammer (20) in die zweite Kammer (21) undurchlässig ist, wenn keine Mindestdruckdifferenz für den Flüssigkeitseintritt an die in der ersten Kammer (20) enthaltene Probenflüssigkeit angelegt ist; daß die Mittel (37) für das Anlegen einer Druckdifferenz, die mindestens gleich der Mindestdruckdifferenz für den Flüssigkeitseintritt ist, angepaßt sind, und daß Leitungsmittel (11) für das Fördern der Probenflüssigkeit in der Vorrichtung vorgesehen sind.

8. Vorrichtung nach Anspruch 7, **gekennzeichnet** durch Mittel (C) zum Verändern des an die Probenflüssigkeit in der ersten Kammer (20) angelegten Drucks.

9. Vorrichtung nach Anspruch 8, dadurch **gekennzeichnet,** daß die Leitungsmittel (11, 17) einen flexiblen und kompressiblen Abschnitt aufweisen, um die angelegte Druckdifferenz zu verändern.

10. Vorrichtung nach Anspruch 7, 8 oder 9, dadurch **gekennzeichnet,** daß die Leitungsmittel Leitungen (11, 17) zu und von der Membran (23) und der ersten Kammer (20), sowie Ventile (38, 16') in den Leitungen aufweisen, die betätigbar sind, um zu schließen und Probenflüssigkeit in einem Behälter zu halten, der durch Abschnitte der Leitungen (11, 17) und durch die erste Kammer (20) gebildet ist.

11. Vorrichtung nach Anspruch 7, dadurch **gekennzeichnet,** daß die Leitungsmittel zum Fördern von Probenflüssigkeit einen Behälter aufweisen, aus dem ein Teil der Probenflüssigkeit zwangsgefördert wird.

**Revendications**

1. Procédé pour réaliser une dilution contrôlée avec précision d'échantillons liquides en analysant des échantillons liquides, en utilisant un détecteur analytique pour la mesure de caractéristiques du liquide, comprenant les étapes consistant à réaliser une amenée (10) d'un échantillon liquide en contact avec une surface d'une membrane (23) possédant des pores; à faire passer un courant ou flux de diluant (13) sur l'autre surface de ladite membrane (23) et à travers un détecteur analytique (19) pour analyser l'échantillon liquide; et à appliquer un différentiel de pression à travers ladite membrane (23) pour fournir de manière contrôlée des quantités dudit échantillon liquide (10) dans ledit flux de diluant (13) suffisant pour la détection dudit échantillon liquide par le détecteur analytique (19), par quoi ledit liquide d'échantillon est dilué dans le flux de diluant lors de l'application dudit différentiel de pression, caractérisé en ce que ledit différentiel de pression appliqué à travers ladite membrane est au moins égal à un différentiel de pression minimum d'entrée du liquide nécessaire pour permettre l'amenée d'un échantillon liquide dilué au détecteur analytique (19), et en ce que le liquide d'échantillon ne pénètre pas à travers ladite membrane (23) en l'absence de l'application dudit différentiel de pression minimum d'entrée du liquide.

2. Procédé selon la revendication 1, caractérisé par l'étape consistant à faire varier la pression sur ledit liquide d'échantillon dans ladite amenée pour faire varier et régler les quantités de liquide transportées à travers ladite membrane (23).

3. Procédé selon la revendication 1 ou la revendication 2, caractérisé par l'étape consistant à maintenir une partie dudit liquide d'échantillon dans un réservoir, tout en maintenant le contact avec ladite surface de ladite membrane (23).

4. Procédé selon la revendication 1, la revendication 2 ou la revendication 3, caractérisé en ce que ledit différentiel de pression minimum d'entrée du liquide est une force produite par le vide.

5. Procédé selon l'une des revendications 1 à 3, caractérisé en ce que ledit différentiel de pression minimum d'entrée du liquide est une force positive produite par une pompe.

6. Procédé selon l'une des revendications précédentes, caractérisé en ce que ladite pression est appliquée par un autre fluide, ledit différentiel de pression étant varié en faisant varier une résistance à l'écoulement dudit autre fluide.

7. Appareil pour réaliser une dilution contrôlée avec précision d'échantillons liquides dans l'analyse d'échantillons liquides, comprenant un moyen d'amenée (10;15) pour fournir un liquide d'échantillon et un diluant pour ledit liquide; des moyens formant conduit (14) pour transporter ledit diluant dans ledit appareil et des moyens (15) connectés auxdits moyens formant conduit pour appliquer une pression, afin de déplacer lesdits liquide et diluant à travers lesdits moyens formant conduit; un détecteur (19) pour capter la quantité dudit liquide dans ledit diluant; une paire de chambres (20,21) contenues dans un logement (22) et connectées de façon qu'une première chambre (20) maintient le liquide d'échantillon et une deuxième chambre (21) reçoit un courant ou flux d'écoulement dudit diluant; une membrane poreuse (23) positionnée dans le logement entre, et séparant, lesdites chambres et lesdits liquides d'échantillon et diluant dans celles-ci et des moyens (37) pour appliquer un différentiel de pression sur ledit liquide d'échantillon, caractérisé en ce que ladite membrane (23) est imperméable au passage dudit liquide d'échantillon de la première chambre (20) à la deuxième chambre (21), en l'absence de l'application d'un différentiel de pression minimum d'entrée du liquide sur ledit liquide d'échantillon maintenu dans ladite première chambre (20); en ce que lesdits moyens (37) sont aptes à appliquer un différentiel de pression au moins égal audit différentiel de pression minimum d'entrée du liquide, et en ce que les moyens formant conduit (11) sont prévus pour transporter ledit liquide d'échantillon dans ledit appareil.

8. Appareil selon la revendication 7, caractérisé par des moyens (C) pour faire varier la pression appliquée au liquide d'échantillon dans la première chambre (20).

9. Appareil selon la revendication 8, caractérisé en ce que lesdits moyens formant conduit (11,17) possèdent une portion flexible pouvant être comprimée pour faire varier le différentiel de pression appliqué.

10. Appareil selon la revendication 7, la revendication 8 ou la revendication 9, caractérisé en ce que lesdits moyens formant conduit comprennent des conduits (11, 17) menant vers et de ladite membrane (23) et ladite première chambre (20) , et des vannes (38, 16') dans lesdits conduits pouvant être actionnées pour fermer et maintenir ledit liquide d'échantillon dans un réservoir constitué par des sections desdits conduits (11, 17) et de ladite première chambre (21).

11. Appareil selon la revendication 7, caractérisé en ce que les moyens formant conduit pour transporter le liquide d'échantillon présente un réservoir duquel une partie du liquide d'échantillon est forcée.

EP 0 264 182 B1

*Fig.1.*

*Fig.4.*

*Fig.3.*

*Fig.2.*

*Fig.5.*

*Fig.6.*

*Fig.7.*

*Fig.8.*

_Fig.9._

_Fig.10._

14